# EUROPEAN PATENT APPLICATION

(11) **EP 2 393 042 A1**
(43) Date of publication of application: **07.12.2011**
(21) Application number: 11166764.8
(22) Date of filing: 19.05.2011
(51) Int. Cl.: G06K 9/32, G06K 9/00

(54) **Selecting view orientation in portable device via image analysis**

(30) Priority: 10.03.2011 US 45414; 04.06.2010 US 351780 P
(71) Applicant: Sony Computer Entertainment Inc., Tokyo 108-0075 (JP)
(72) Inventor: Stafford, Jeffrey Roger, Foster City, CA 94404-2175 (US); Osman, Steven, Foster City, CA 94404-2175 (US)
(74) Representative: Turner, James Arthur

(57) **Abstract**

Methods, systems, and computer programs for setting the orientation of a view shown on a portable device's display are presented. In one embodiment, a method includes an operation for capturing an image of the area in front of the display. Further, the location of one or more features of a person's face is identified when the person is located in the area in front of the display. The method includes another operation for determining one axis of the face based on the location of these features. Additionally, the orientation of the view shown on the display of the portable device is set to substantially correspond to the axis of the face.

## Description

The present invention relates to methods and systems for displaying information, and more particularly (though not exclusively), to methods and systems for setting the orientation of a view shown on a display of a portable device.

To improve the versatility of the ever growing number of portable devices, manufacturers are equipping the portable devices with improved elements, such as faster CPUs, larger displays, wireless options, new input methods, longer- lasting batteries, sensors, etc. This versatility and increased power enables these devices to be used in more applications, which in the past could only be executed in large systems, personal computers, or laptops.

Typical portable devices include one or more displays, where the largest display is rectangular in shape. Older mobile phones only run a limited amount of applications, such as phone dialing, contact list management, or game playing. The applications were designed for a particular orientation of the display, corresponding to the natural way of holding the phone. For example, a display would always display information in portrait mode because the phone was supposed to be held that way. However, with the use of new applications in portable devices, such as web browsers and email clients, as well as the proliferation of new applications from independent vendors, the single orientation of the device does not work optimally for many applications. Additionally, users may wish to have different views within the same application, such as looking at a web page in portrait or landscape mode.

Some portable devices have inertial sensors, such as gyroscopes and accelerometers, which allow the portable devices to detect changes in position. The portable device detects when the user turns the device and changes the view on the display accordingly. Since the detection is based on inertial or gravitational measurements, the detection of a change in position of the display fails in many situations. For example, if the player of a portable device is laying down on his back, or if the portable device is resting on a table, the inertial measurements will not provide adequate information to determine the best orientation for the view in the display.

It is in this context that embodiments of the invention arise.

Various respective aspects and features of the present invention are defined in the appended claims.

Embodiments of the present invention provide methods, systems, and computer programs for setting the orientation of a view shown on a portable device's display. A portable device contains a display and a camera facing the user, where the orientation of the device in relation to the user can be determined from the video image of the user's face, which is captured in real-time. The video image from the camera is analyzed using a face recognition algorithm and the orientation of the view in the device can be determined based on the features of the player, such as a line formed between the eyes, a line from an eye to the nose, a line from the eye to the mouth, a line from the nose to the mouth, etc.

It should be appreciated that the present invention can be implemented in numerous ways, such as a process, an apparatus, a system, a device or a method on a computer readable medium. Several inventive embodiments of the present invention are described below.

In one embodiment, a method includes an operation for capturing an image of the area in front of the display. Further, the location of one or more features of a person's face is identified when the person is located in the area in front of the display. The method includes another operation for determining an axis of the face based on the location of these features. The orientation of the view shown in the display of the portable device is set to substantially correspond to the axis of the face.

In another embodiment, a portable device includes a display, a camera, and a player locator module. The camera captures images of the area in front of the display. The player locator module identifies the location of features of a person's face when the person is situated in the area in front of the display. Further, the player locator module determines an axis of the face based on the location of the features. The orientation of the view shown on the display is selected such that the orientation of the view substantially corresponds to the axis of the face.

In yet another embodiment, a computer program embedded in a computer-readable storage medium, when executed by one or more processors, sets the orientation of a view shown on a display of a portable device. The computer program includes program instructions for capturing an image of the area in front of the display. Further, the location of one or more features of a person's face is identified when the person is located in the area in front of the display. The computer program also includes program instructions for determining an axis of the face based on the location of these features and for setting the orientation of the view in the display of the portable device to substantially correspond to the axis of the face.

Other aspects of the invention will become apparent from the following detailed description, taken in conjunction with the accompanying drawings, illustrating by way of example the principles of the invention.

The invention may best be understood by reference to the following description of embodiments of the invention, taken in conjunction with the accompanying drawings in which:
Figure 1 depicts a player using a portable device while laying down, according to one embodiment.
Figure 2 shows a player interacting with a portable device resting on a table, according to one embodiment.
Figure 3A illustrates a player holding a portable device whose back is almost parallel to the floor, according to one embodiment.
Figure 3B illustrates the effect of changing device position when the device is almost parallel to the floor, in accordance with one embodiment.
Figure 4 illustrates the process of selecting view orientation based on player position, according to one embodiment.
Figures 5A-5B illustrate how view orientation adjusts when the players changes the device position, according to one embodiment.
Figure 6 illustrates the selection of the view orientation based on the player's facial features, according to one embodiment.
Figure 7 illustrates the selection of view orientation based on a second position, according to one embodiment.
Figure 8 illustrates the detection of alternative facial features, according to one embodiment.
Figure 9 illustrates an embodiment for detecting the player's face contour, according to one embodiment.
Figure 10 illustrates the process of using infrared light and infrared sensors for detecting player's eyes, according to one embodiment.
Figure 11 illustrates the detection of player's eyeglasses, according to one embodiment.
Figure 12 illustrates the detection of a headset worn by the player, according to one embodiment.
Figure 13 illustrates view selection when a player is laying down on his stomach, according to one embodiment.
Figures 14A-14B illustrate view selection in a free-standing device that has a display and a face-facing camera, according to one embodiment.
Figures 15A-15B illustrate view selection for a driver holding a portable device, according to one embodiment.
Figure 16A-16B illustrate a portable device where the view is anchored with respect to the player's face, according to one embodiment.
Figure 17 shows the process flow for setting the orientation of a view shown on a display of a portable device in accordance with one embodiment of the invention.
Figure 18 illustrates the architecture of a device that may be used to implement embodiments of the invention.

The following embodiments describe a method and apparatus for setting the orientation of a view shown on a portable device's display. Embodiments of the present invention analyze video image taken with the camera of a portable device that is facing the user of the portable device. One or more features of the face, head, or region around the head, are detected to determine the position of the player (or the face of the player) and the view orientation on the screen of the portable device that best matches the position or face of the player. Additionally, the processes can be embodied as hardware integrated into the portable device, computer-implemented methods executed on a processor of the portable device, or rendered in special programmed hardware. For example, the operations can be defined as logic that is coded onto an application-specific chip or some operations can be processed on chip and others on a general processor of the portable device.

It will be apparent, however, to one skilled in the art, that the present invention may be practiced without some or all of these specific details. In other instances, well known process operations have not been described in detail in order not to unnecessarily obscure the present invention.

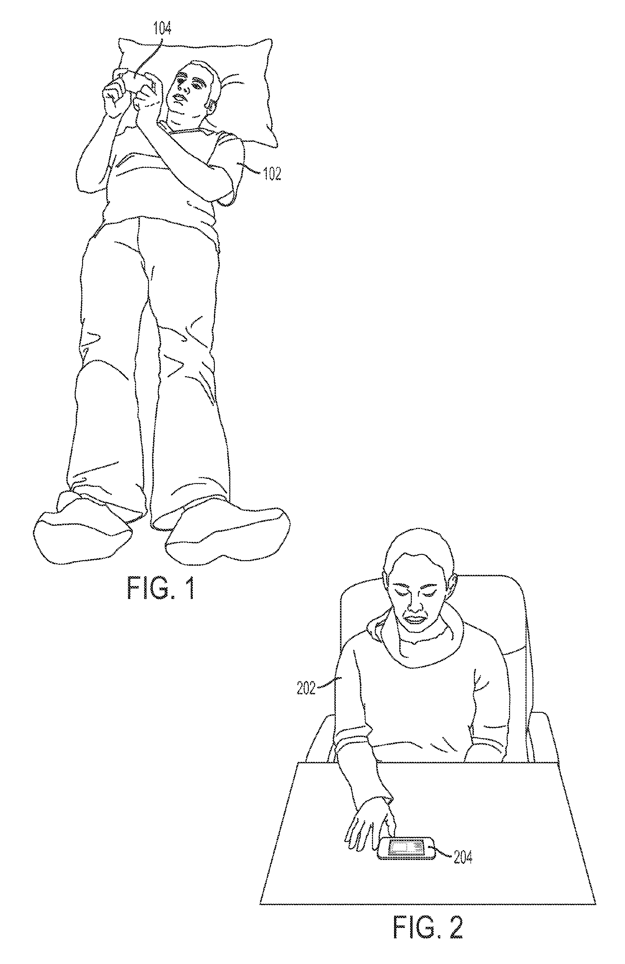

Figure 1 depicts player 102 using portable device 104 while laying down, according to one embodiment. Portable device 104 can display content in portrait or landscape mode. Portable device 104 uses an algorithm to determine what is the best or optimal way to display content for the user. If portable device 104 bases the algorithm on inertial or gravitational measurements, the algorithm will fail under several scenarios. Typically, the algorithm assumes that the user is holding the device while standing or sitting down.

If a user is standing and holding a portable device sideways in the user's hand, the device correctly determines that content should be displayed in landscape format. But if the user is laying down, as shown in Figure 1, but still holding the device in the same manner, the device may incorrectly show content in the portrait format. This issue is caused when devices utilize motion sensors to determine the direction of gravity in relation to the device. These devices adjust their content orientation in relation to gravity and not in relation to the user.

Also, these devices may suffer from the opposite effect. They sometimes do not switch to portrait mode if they are not correctly tilted in relation to gravity. Embodiments of the invention detect the position of the user's eyes or face and determine the optimum way to display the information.

In should be noted that although embodiments of the invention are described for certain portable devices, such as a portable game device, the principles of the invention can be used with any type of device, such as a game controller, a portable gaming device, a cell phone, a camera, a tablet, a laptop, a personal digital assistant (PDA), a portable music player, a portable video player, a remote control, a digital photo frame, a camcorder, a portable television, a global positioning system (GPS) device, etc.

Figure 2 shows player 202 interacting with portable device 204 resting on a table, according to one embodiment. If portable device 204 checks the relation to gravity, then any position of the device on the table will measure the same relation to gravity. If the device is turned around on the table, the device will never change view orientation because the relation to gravity does not change, and the device will be incapable of switching the orientation of the view in the display.

For description purposes, it is assumed that the portable device is capable of presenting a view on the display in one out of four different modes. If an arbitrary side of the display is assigned the north side, and the other three sides are assigned east, south, and west, the portable device can present the view on the display such that the top side of the view corresponds to one of north, south, east, or west side in the display. This means that two modes will be in portrait mode, one being a 180° turn from the other one, and two modes in landscape mode. Some devices may only have two modes, portrait and landscape, or three modes, where one side cannot be used as the top of the view, etc. Additionally, other devices may have more modes of presentation, for example, the views may be 45° apart instead of 90° and have 8 different modes. Further yet, one device may display the scene in any orientation, independently of the position of the display and base the orientation exclusively on the position of the player. Unless otherwise noted, the principles of the invention are described below in reference to a device with 4 possibilities for selecting the orientation of the view, but the principles of the invention can be applied to any device with any number of potential display orientations.

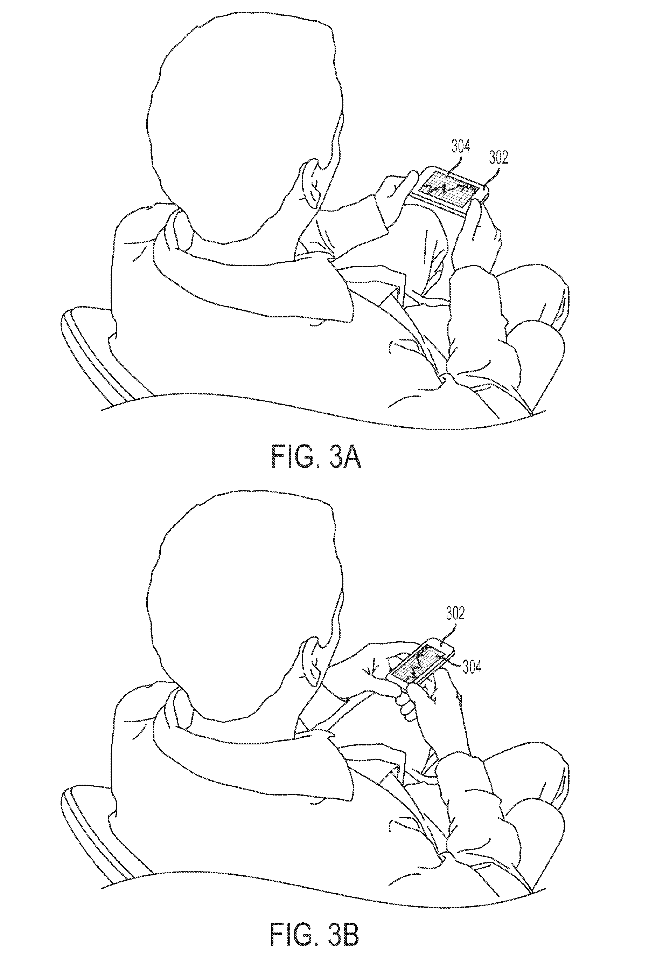

Figure 3A illustrates a player holding a portable device whose back is almost parallel to the floor, according to one embodiment. Figures 3A and 3B illustrate the problem of setting the view orientation correctly when the user is holding portable device 302 almost parallel to the floor, i.e., the surface on display 304 is almost parallel to the floor. In Figure 3B, display 304 shows a chart in landscape mode. Figure 3B illustrates the effect of changing device position when the device is almost parallel to the floor, in accordance with one embodiment. In Figure 3B, the user has turned device 302 90° expecting to switch the view to portrait mode. However, since the portable device is almost parallel to the floor, the gravitational sensors in portable device 302 do not detect the change in position because the device has hardly changed position with respect to gravity. As a result, display 304 is still in landscape mode instead of in portrait mode. As the user becomes more familiar with the behavior of the device, the user learns to tip the portable device to a vertical position to trigger the change of the orientation. Sometimes, the user tips the device to a vertical position and then back to a horizontal position fast, and the portable device still does not change the view orientation. This tipping back and forth becomes annoying to the user and the user experience for having a versatile portable device becomes unsatisfactory.

Additionally, many games for portable devices, such as mobile phones, use tilt to input commands. For example, a car may be driven by tilting the device up or down on one side. These devices require that the player sits upright because the neutral position is hardcoded. Embodiments of the invention allow the device to set the neutral position anywhere by detecting features of the player's face. Games can set the view orientation in the display based on the relative position to the player's face. Gravity is not a factor, making possible to play these games in outer space.

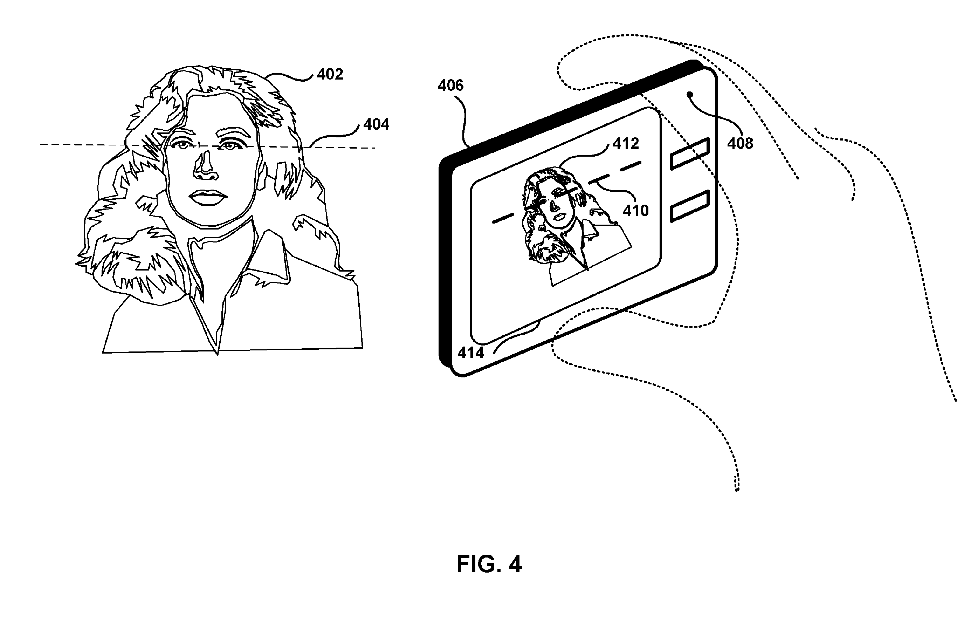

Figure 4 illustrates the process of selecting view orientation based on player position, according to one embodiment. Portable device 406 includes display 414 and video-capable camera 408 facing the user. Facial recognition software on the video image from camera 408 can detect one or more features of the face that can be used to determine the face's orientation. In general, a facial recognition system can be defined in a computer application, hardware, or a combination of hardware and software, for automatically identifying or verifying a position of a person's head from a digital image or a video frame from a video source. One embodiment compares selected facial features from the image with a facial database. The database can be coupled to logic that allows identification of specific facial features, while allowing for variations in expected placement of features. For instance, some people have more or less separation between the eyes, etc., and age of the user can also impact the allowable tolerances when interfacing with a database. In another embodiment, facial recognition algorithms identify faces by extracting landmarks, or features, from an image of the subject's face. For example, an algorithm may analyze the relative position, size, or shape of the eyes, nose, cheekbones, jaw, etc. These features are then used to search for other images with matching features or to calculate probabilities that specific human features are present, and then calculate their location. In still another embodiment, an algorithm can be used to normalize a gallery of face images and then compress the face data, only saving the data in the image that is useful for face detection. This will provide face metadata that can be quickly indexed and searched. A probe image can also be compared with the face data.

In one embodiment, in addition to face recognition, objects on or around the user's head may be used to detect orientation. Examples, without limitation, include glasses, hats, earbuds, headphones, shirt collars, necklaces, hair pins, etc. These features alone or mixed with face features can be used to detect orientation and/or position relative to a screen of the portable device.

It should be noted that face recognition as used herein refers to detecting features in the player's face, such as eyes, nose, mouth, etc. In still another embodiment, it is not needed to actually "recognize" a particular user for setting the view orientation. However, other embodiments may also provide for user recognition to allow each user to define preferences and other controls for the use of the portable device. The embodiments presented should therefore not be interpreted to be exclusive or limiting, but rather exemplary or illustrative.

The detected features can include one or more of the eyes, the nose, the mouth, the ear, the contour of the face, glasses, etc. The orientation of the face can be determined based on lines connecting some of these features, such as lines connecting the eyes, an eye and the nose, the nose and the mouth, an eye and the mouth, the ears, etc.

Line 404 connects the eyes of user 402. Video camera 408 captures images of player 402, which are represented in display 414. It should be noted that player 402 is holding device 406 in her hand. The image of player 402 is shown next to device 406 for presentation purposes only. Additionally, the captured image of player 412 is shown on display 414, but other embodiments of the invention do not present the player on the display and perform the face recognition analysis on the background while other application determines what is shown in display 414.

Device 406 detects the eyes of the player and creates line 410 connecting the player's eyes. Line 410 is parallel, or close to parallel, to the actual line 404 that connects the player's eyes. The portable device determines that line 410 is parallel to a hypothetical horizon line on the display, therefore, the orientation of the view is correct in landscape mode.

For description purposes, the horizon line in a view shown in the display is referred to herein as the line parallel to the top and bottom lines of the display when the view is shown as intended by the program in relation to the position of the user. The top side of the display is above the horizon and the bottom side of the display is below the horizon. Many times, the horizon line of the view would correspond to the horizon line of what is shown in the display. For example, if a user is viewing a nature scene and the camera that took the scene was set parallel to the floor, the horizon in the view will correspond with the horizon in the scene. However, if the camera took the nature scene with a 45° angle, then the actual horizon of the view will not correspond to the horizon of the scene. For description purposes, the horizon of the view defines the orientation on the display. It should also be noted, that a horizon line will also convey information regarding what is above and what is below the horizon. This way, a view orientation may have the correct horizontal line but it may be upside down, making the view orientation incorrect for showing in the display.

Face recognition can be performed at different frequencies. For example, face recognition can be performed at each video frame, every 10 frames, every second, etc. The frequency of face recognition analysis depends on the amount of processing required and the responsiveness of the device. The more often the analysis is performed, the larger amount of computing resources will be required, and the faster the device will be to detect a required change of view orientation when the device changes positions. In one embodiment, the view orientation does not change unless several frames have been detected requiring a change in view orientation. This avoids the problem of switching view when the user is playing a game and does a quick move of the device before going back to the previous position, which means that the player did not intend to change the orientation of the device. In another embodiment, the face recognition frequency is increased when the device detects that a change in orientation is needed. This helps avoiding the detection of false positives.

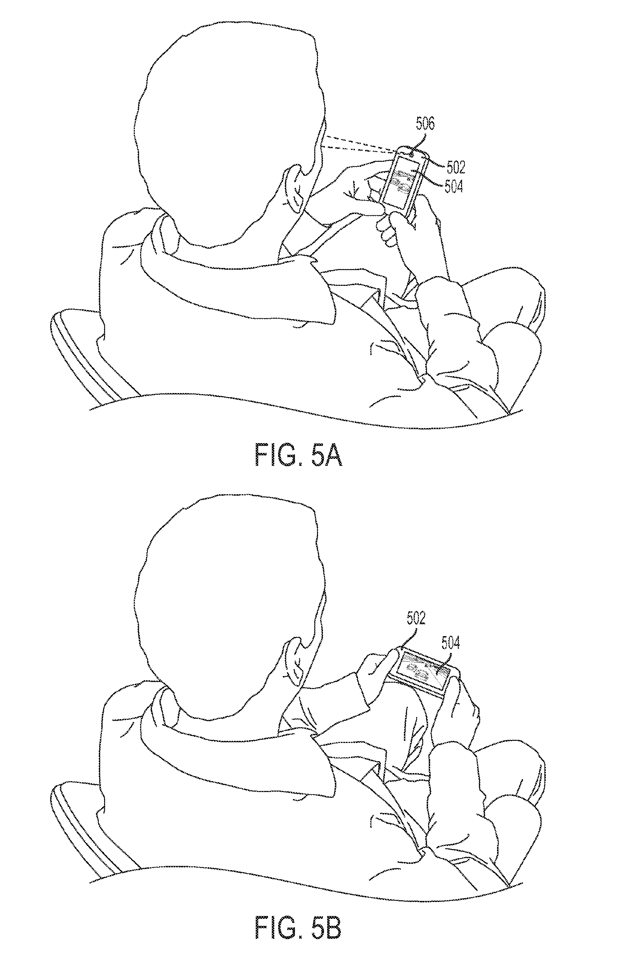

Figures 5A-5B illustrate how view orientation adjusts when the players changes the device position, according to one embodiment. In Figure 5A, camera 506 takes video images of the area in front of the camera, which includes the player's face. Device 502 is being held in an upright position. The face recognition algorithm in device 502 has analyzed the video images from camera 506 to detect the position of the player's eyes, causing the device 502 to show view 504 in portrait mode.

Once the player turns the device 90°, the image analysis will detect that the position of the eyes in relation to the device has changed and the view will then be turned 90° to respond to the turn of the device. View 504 is displayed in landscape mode in Figure 5B, even if device 504 is being held almost parallel to the floor, because the algorithm does not depend on gravitational measurements.

It should be noted that the orientation of the view would also be adjusted if the player aims the device at another person. For example, if a user is viewing pictures and wants to show a picture to another person, the player can aim the display towards the other person. The face detection algorithm will detect the face of the other person and display the image accordingly.

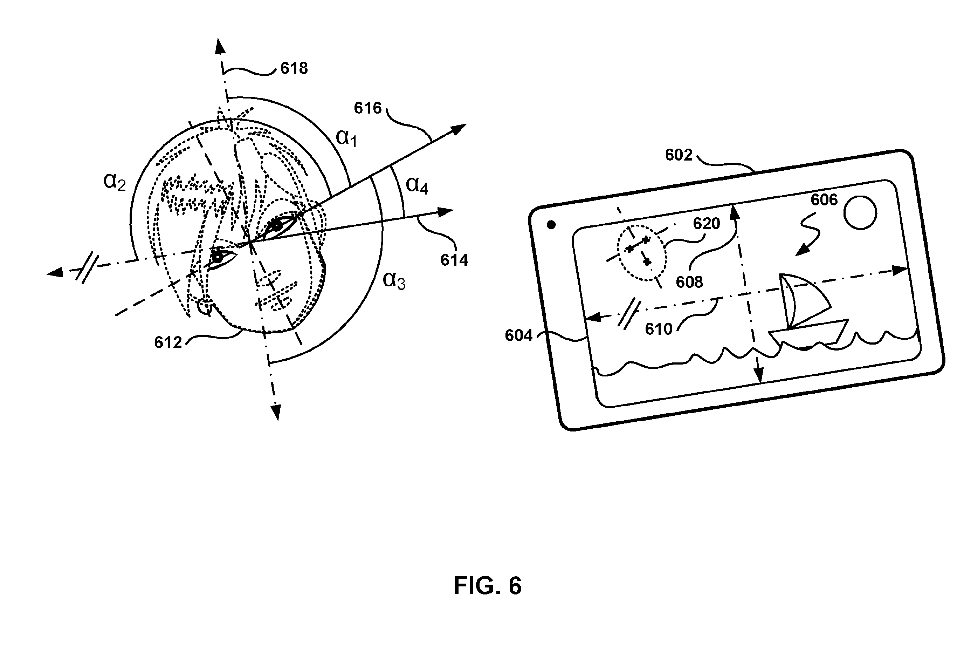

Figure 6 illustrates the selection of the view orientation based on the player's facial features, according to one embodiment. The angle of device 604 in relation to the user can be roughly calculated as the angle between one of the facial feature lines and an imaginary line running down an axis of the video image. The orientation of the content on the device can be chosen by picking the nearest right angle to this calculated angle. Also, the orientation can be selected by choosing the closest angle to the horizon of the view. This latter approach is described below, but the principles of the invention can be applied to the vertical axis of the view or to different axes of the user's face.

After analyzing the image of player 612 the portable device has detected the eyes and the mouth of the player, which is represented in iconic symbol 620 where the eyes and mouth are represented by crosses. Line 616 is formed by connecting the eyes together. Line 616 divides the image plane into two half-planes, and the position of the mouth is used to determine which half-plane contains the part of the head above the eyes, and which half-plane holds the mouth. The positive direction of line 616 is referred to herein as the direction going from the right eye of the player (which appears on the left in the picture) to the left eye of the player (which appears on the right in the picture). In another embodiment, the mouth is not detected and gravity is used to determine which way is up or down by assuming that the player is standing up.

The method calculates the angles between line 616 and lines parallel to the axes of the display to determine the relative position of the face and the display and select the optimum orientation for view 606 in display 604. Display 604 has axis 608 and 610, which are parallel to lines 618 and 614, respectively. Since four orientations are possible for the view in display 604, four angles are calculated, where each angle indicates how far apart is the line connecting the eyes with a potential view horizon. Thus, angles α₁-α₄ are calculated from the positive part of line 616 to the positive and negative directions of lines 618 and 614.

In the example of Figure 6, α₄ is the smallest angle from α₁-α₄. As a result, line 614 is chosen as the horizon for view 606, where the positive direction of 614 corresponds to the direction associated with α₄, which enables setting the view orientation in the right direction and not upside down. Since axis 610 is parallel to line 614, axis 610 is chosen as the horizon for the view orientation.

By running this process in real-time, a portable device can maintain the correct orientation of the content displayed to the user at all times. Setting view orientation based on image recognition provides a more robust system compared to existing systems which utilize motions sensors (gyroscopes, accelerometers).

In one embodiment, interpolation is used to better determine the facial features. Information from several images is correlated in order to improve face recognition by using image data from several images. This improves face recognition, especially in difficult situations like low-light or back-light environments.

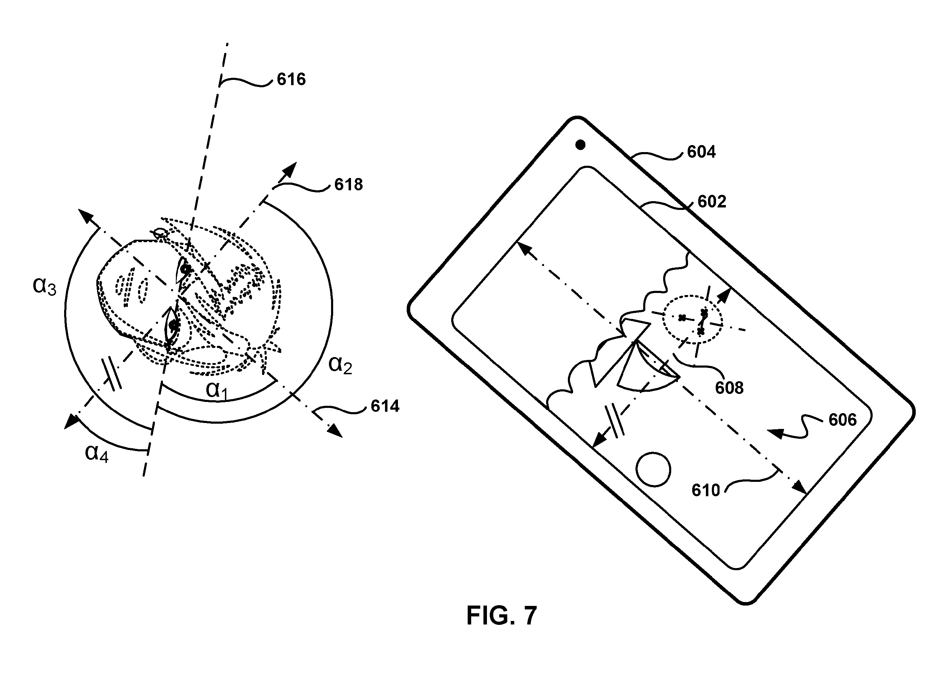

Figure 7 illustrates the selection of view orientation based on a second position, according to one embodiment. Line 616 connecting the eyes of the player is closest to line 618 because angle α₄ is the smallest from all angles α₁-α₄. Therefore the orientation for view 606 is set such that display's latitudinal axis 608, parallel to line 618, is the horizon for the view where the half-plane above the horizon corresponds to the half-plane where the player's forehead is located. In other words, the positive direction of the horizon, defined as a direction going from left to right, forms the smallest α angle with the positive direction of line 616.

It should be appreciated that the embodiments illustrated in Figures 6 and 7 are exemplary calculations of the view orientation based on particular features of the player's face and the position of the display. Other embodiments may utilize different features or may calculate different angles, but still perform some calculations. For example, the features of the face may be defined by a line joining the eyes, a line joining nose and mouth, lines from the eyes to the mouth, etc. The position of the display may be compared with respect to a longitudinal axis, a latitudinal axis, a diagonal from the top left corner of the display to the bottom right corner of the display, any of the sides of the display, any of the sides of the device, etc. In some cases, the closest angle is searched to a certain reference line, as described above, while in other cases a different angle is the preferred angle, such as a 90° angle when comparing to a vertical axis, or a 30° angle when using a line from the eye to the mouth, etc. The embodiments illustrated in Figures 6 and 7 should therefore not be interpreted to be exclusive or limiting, but rather exemplary or illustrative.

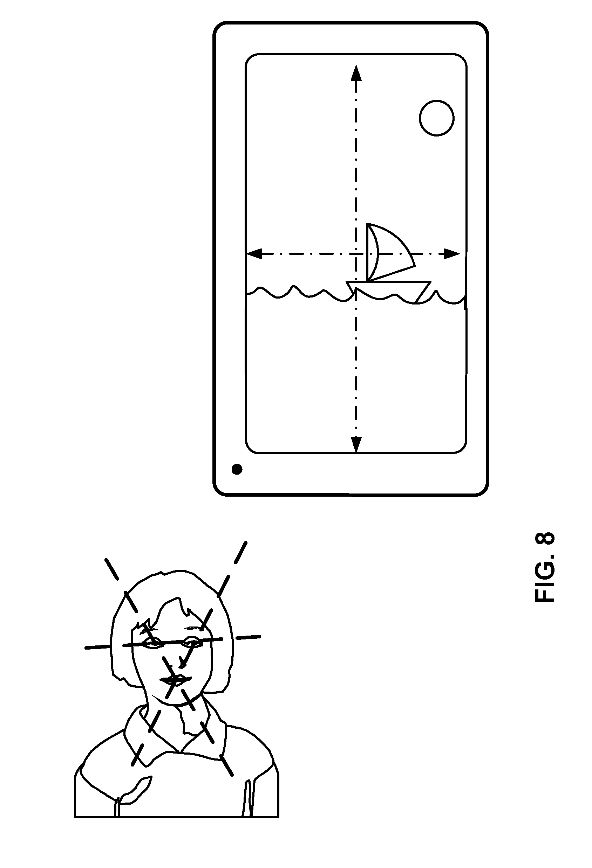

Figure 8 illustrates the detection of alternative facial features, according to one embodiment. In Figure 8, the portable device detects the eyes and the mouth of the user. In order to determine the view orientation, lines connecting the eyes and each eye with the mouth are created. The lines are then used by the player locator module in the portable device to determine the position of the player and then select the most appropriate orientation for the display, as previously discussed in reference to Figures 6 and 7. In Figures 6 and 7, only one calculation was performed in reference to the eyes of the player. In one embodiment, two or more calculations are performed to select the orientation. For example one calculation may be performed in reference to the line connecting the right eye and the mouth, and another calculation with the line connecting the left eye and the mouth. The results for both calculation are then evaluated (such as averaging the results) to select the optimal orientation.

In another embodiment, the eyes and the nose are detected. A first line connecting the eyes is calculated, and then a second line perpendicular to the first line and passing through the nose is calculated. An algorithm, similar to the algorithm described in reference to Figures 6 and 7, is used to calculate the orientation of the view.

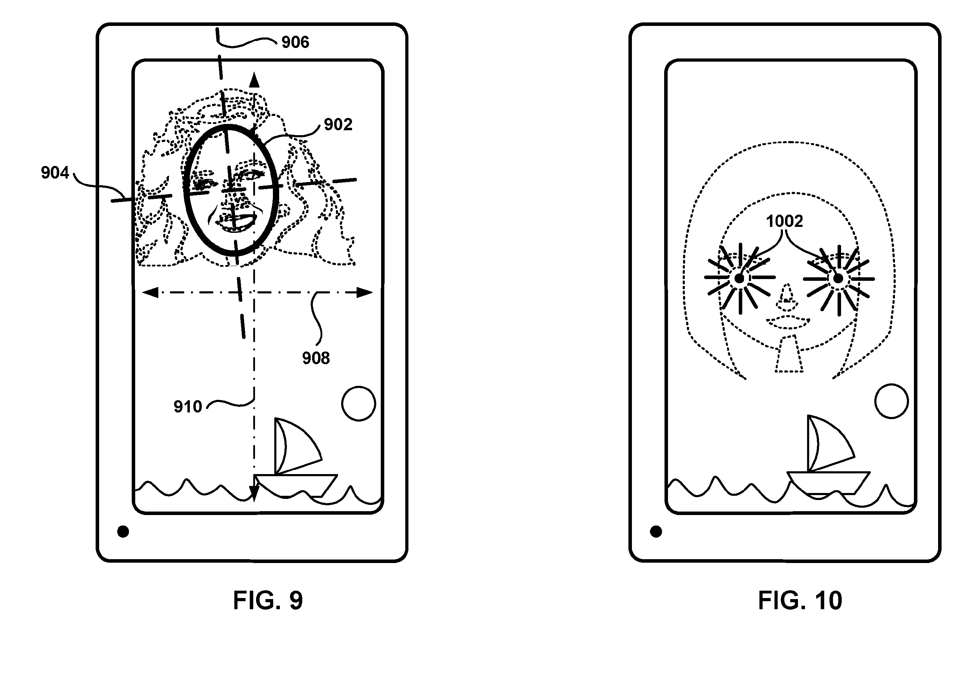

Figure 9 illustrates an embodiment for detecting the player's face contour, according to one embodiment. The face recognition algorithm analyzes the image in order to determine the location of the player's face. A contour of the face is determined and then a geometric figure is defined approximating the location of the face. In one embodiment, the face contour is assigned an oval that closely matches the contour. The long and short axes of symmetry of the oval are then used to select the orientation. For example, the short axis should be parallel to the line connecting the eyes, and the same method described in reference to Figure 6 is used. The longer axis of symmetry of the oval can be used instead and a similar geometric method can be used to determine the orientation. In another embodiment, an ellipse is used to approximate the contour of the face.

Instead of the contour of the face, the contour of the head can also be used. In users with short hair, the contour of the face and the contour of the head are similar, but when a user has long hair, such as the one in Figure 9, the contour of the face may be quite different. In yet another embodiment, the contour of the face is combined with other information about other features in the face, such as eyes, nose, mouth, etc., or with the contour of the head in order to improve accuracy. Also, the orientation algorithm may change according to lighting conditions. For example, in a situation with backlight behind the player it will be easier to detect the contour of the head than the contour of the face or other face features. In this case the contour of the face can be used to select orientation, at least until lighting conditions improve.

Figure 10 illustrates the process of using infrared light and infrared sensors for detecting player's eyes, according to one embodiment. The portable device includes an infrared light emitter and an infrared sensor that detects the reflection 1002 from the eyes. These two dots are then used to calculate the orientation in similar fashion to the methods previously described.

The glossy surface of the eyes facilitates the reflection of the infrared light for detection by the sensor. Similarly, glasses on a user will facilitate the reflection of the infrared light, but the light will not be reflected as just a dot for each eye, but rather as a circle or similar geometric figure.

In another embodiment, other types of light can be used instead of infrared light. For example, the light can be from LEDs on the portable device, or from the light emitted by the display, or by a flash-type light, etc. When the recognition of the face is based on the reflection from the display, the orientation algorithm may be temporarily suspended if the view on the display is dark, causing a lack of light that can be reflected from the eyes or the glasses of the user.

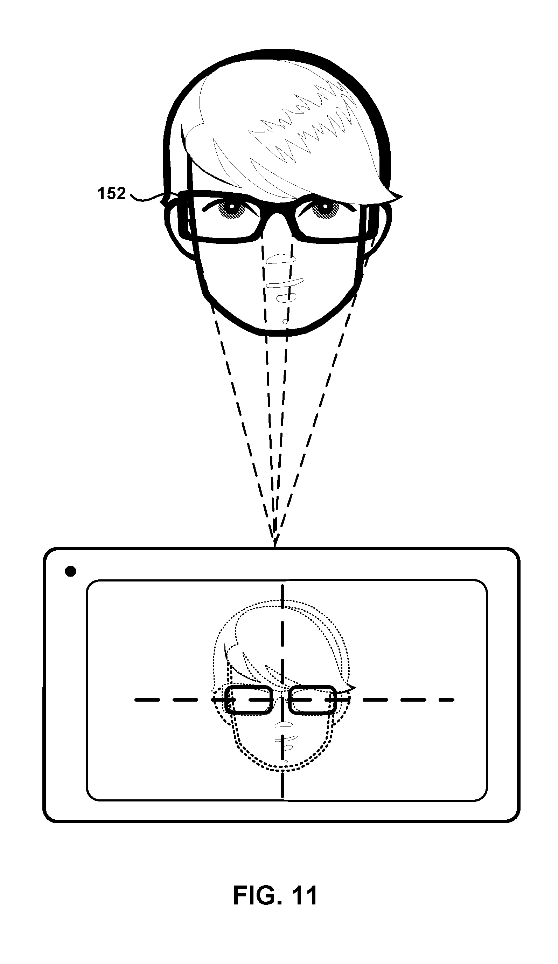

Figure 11 illustrates the detection of player's eyeglasses, according to one embodiment. When the user is wearing glasses 152, it may be difficult to detect the eyes, maybe even impossible if the glasses are tinted. In this case, the portable device detects the geometry of the glasses and uses the geometry to calculate the orientation of the user's face. In most cases, the glass surface of the glasses can be detected and a rectangular shape attributed to each glass for computation purposes. Assuming that the glasses are sitting straight on the player's face, a line connecting the center of the rectangles will be substantially parallel to the line connecting the eyes that the line can be used for determining the view orientation, following the same procedure previously described. In other embodiments, other geometric figures can be used for the approximation of the surface of the glass, such as a circle, an oval, an ellipse, a square, etc.

It should be noted that hair may be covering part of the glasses. In this case, the algorithm will approximate the location of the glass based on the surface of the glass that is visible. For example, if the right glass is completely visible, and the left glass is covered with hair, the algorithm will detect the shape of the right glass and then use this shape to determine where the left glass is, including the part that is not visible. In general, the bottom part of each glass will not be covered, and the algorithm may set the position of the glass based on the lower boundaries of the surface detected.

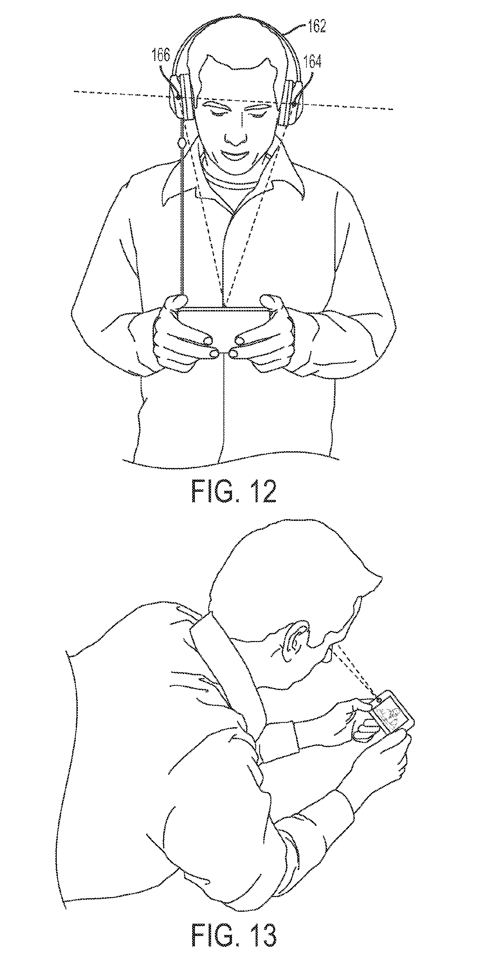

Figure 12 illustrates the detection of a headset worn by the player, according to one embodiment. In one embodiment, image analysis enables the detection of headset 164. A line is formed connecting the left 164 and the right 166 sides of the headset covering the ears. This line is then used to assess the position of the player's head. In one embodiment, the location of the headset is combined with other facial features in order to improve detectability of the user's location.

In another embodiment, the headset includes infrared lights on the ear covers and an infrared sensor or camera in the portable device is used to detect the location of the infrared lights in the headset.

In another embodiment, an accelerometer is incorporated in the headset to track the movement of the headset. This information is shared with the portable device to coordinate the tracking of the headset movement and to set the display orientation accordingly. The tracking information is communicated via band-sharing with the minijack communication, although any other communication mechanism can also be used, such as wireless or infrared communication.

Figure 13 illustrates view selection when a player is laying down on his stomach, according to one embodiment. In this embodiment, the portable device is tracking features of the face of the player. Because the portable device does not rely on gravitational measures, the portable device is able to select the orientation of the display appropriate for the position of the player.

In one embodiment, the portable device can also track actions performed with the face. For example, a long blink of the eyes can be detected in order to perform a command, such as closing a window or presenting the next slide. Other actions can also be used as inputs as long as the portable device is capable of detecting the position of the face and the change of the position of the face. For example, a turn left of the head can scroll the view sideways, a nod can scroll the view down, etc. Even actions performed with the eyes alone, without a move of the head can be used as an input. A look to the left may scroll the scene of a game left, looking up may open a menu, a long closing of the eyes may pause a game, etc.

If the portable device includes two displays on different sides of the portable device and two cameras, each camera capturing the area in front of the corresponding display, it is possible to detect which display the user is looking at. In this case, the portable device may use this information to turn off or dim the other display that is not being observed. If the portable device later detects that the user has changed displays, then the display that was turned off will be turned on and the display that was on may be turned off or dimmed. In one embodiment, both displays can be simultaneously turned on if the portable device detects one user on each side of the device. For example, a user holding a camera may be taking a picture of another person and both may be able to observe what the picture may look like. This can be generalized to allow two different users access to the same content in different displays, such as watching a movie or browsing through a photo album. It should be noted that separate face recognition processes are executed for each side, therefore the orientation of the view in each display is independent from each other.

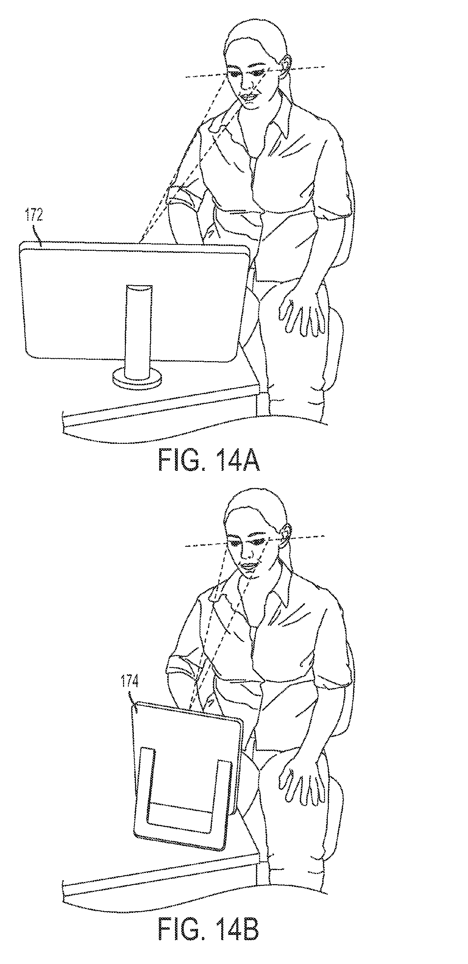

Figures 14A-14B illustrate view selection in a free-standing device that has a display and a face-facing camera, according to one embodiment. Tracking features of the face for setting display orientation can also be used in larger devices, such as tablets, book-readers, or netbooks. In Figure 14A, tablet device 172 has a stand, such that the tablet device can be set on the stand in portrait or landscape mode. The tablet has a camera facing the user and selects the orientation of the display based on the location of the eyes of the user. Similarly, in Figure 14B, book-reader device 174 has been set on a stand in a portrait position. Since book-reader device 174 has detected that the user is sitting on a chair, book-reader device 174 sets the view orientation in a portrait mode matching the position of the display in the reader. If the user changes book-reader device 174 to a landscape position, book-reader device 174 will turn the orientation of the display accordingly after detecting the relative change with respect to the eyes of the reader.

In one embodiment, view orientation is based on the content shown on the display or on the location of the player or both. For example, an application for showing movies may restrict the view orientation to landscape only. Face recognition is used to detect where the player is located and the horizon of the view is adjusted to match the position of the player.

In another embodiment, the user selects whether the view orientation is set accordingly to the position of the face or set to a fixed position. For example, the user may decide to watch a movie while laying down on the sofa. The user may rather have the picture shown in the standard landscape position, instead of having the movie displayed in portrait to match the player's position.

In larger devices, such as a TV or a computer with a large display, there may be several viewers, which are in different positions. The device may select from different heuristics to set the view orientation. For example, if there is only one viewer and then another viewer joins, then the view orientation is fixed to the position it had with the first viewer, or the device may try detect the position of the viewers and select an orientation that matches a majority of the viewers, or the view orientation is based on gravity only and independent of the viewers, etc.

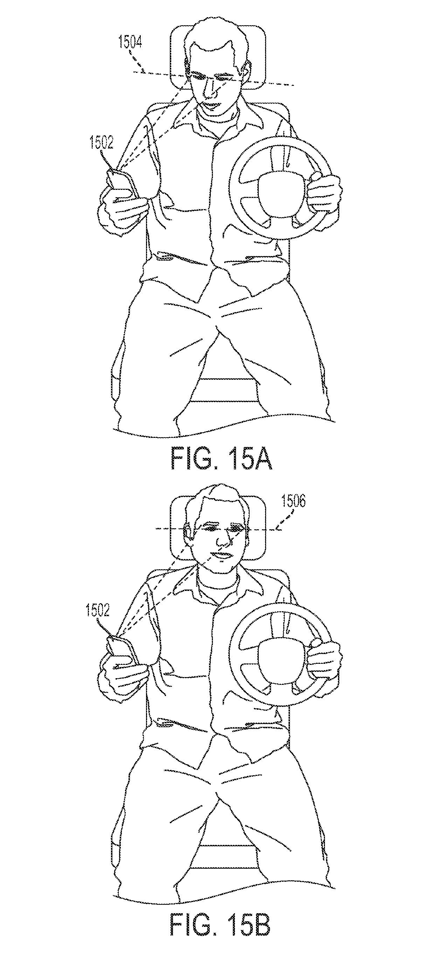

Figures 15A-15B illustrate view selection for a driver holding a portable device, according to one embodiment. Figures 15A and 15B show a driver that is using a GPS-capable device, such as mobile phone 1502 or a dedicated GPS device. The driver is observing map and direction information on mobile phone 1502. In Figure 15A the driver is looking directly at mobile phone 1502, and mobile phone 1502 detects the eyes of the driver and creates line 1504 connecting the eyes. The orientation of the view is then set in reference to line 1504, as previously described.

In Figure 15B the driver is looking ahead at the road. Mobile phone 1502 detects line 1506 connecting the eyes of the driver. Although the direction of line 1506 has changed in reference to line 1504 from Figure 15A, mobile phone 1502 will still display information in the correct orientation because mobile phone 1502 will look for the closest angle to line 1506, as described in reference to Figure 6. The closest angle still corresponds to a portrait presentation of the map or the driving directions.

It has become illegal in some states to text or talk on a mobile phone without a hands-free device while driving. In one embodiment, a mobile phone detects that the phone is in motion and that the relation to the player's face does not change. The mobile phone can detect that it is in motion by using information from inertial sensors or from a GPS module. When the mobile phone detects that the user is in an automobile then the mobile phone disables some features, such as texting or talking without a hands-free device, while enabling other features such as emergency calls or reading a map on the mobile phone. This feature may also be as a parental control. The system can notify a parent of the violations or can cause the vehicle to not start after being properly turned off. A parent can then activate the car remotely after receiving assurances from the driver or the like. An override mechanism allows the person in the car to use these features if the person is a passenger and not a driver.

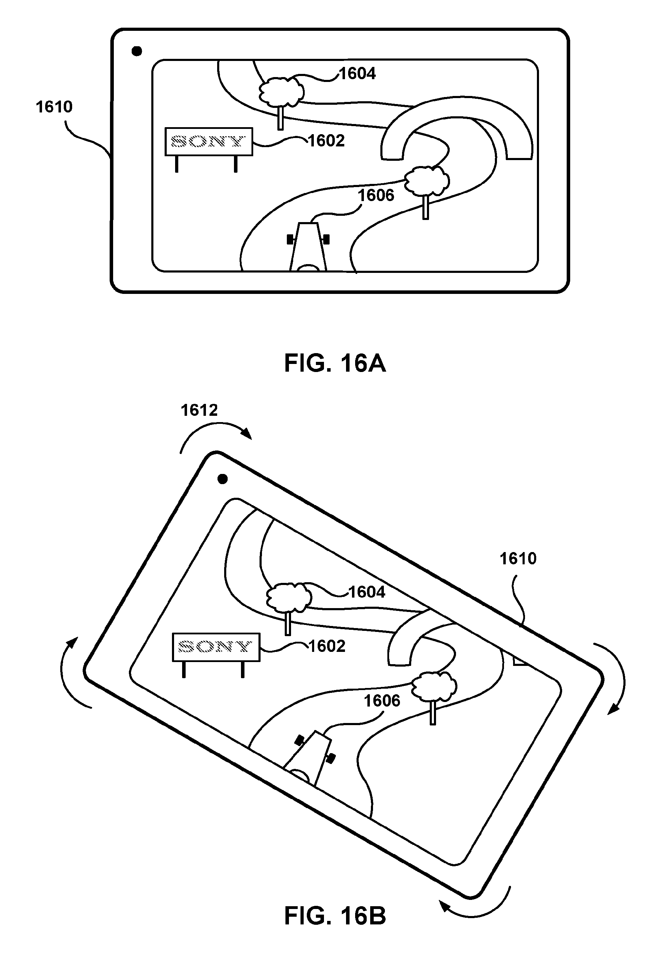

Figure 16A-16B illustrate a portable device where the view is anchored with respect to the player's face, according to one embodiment. Many games executed on portable devices use tilt as an input to control the game. For example, in a driving game, a tilt or turn of the device to the right causes to steer the car to the right and a tilt to the left to steer the car to the left.

Figures 16A and 16B illustrate a method for keeping the view on a display stable, even when the user is tilting the device to input commands. In other words, assuming that the view in the display has a natural viewing horizon, the viewing horizon does not change in respect to the viewer when the device is tilted slightly to the left or to the right.

Figure 16A shows a racing game on device 1610. The view of the game includes several objects, such as tree 1604, billboard 1602, and car 1606. Figure 16B shows the same game after the players has turned the device about 30°. In general, the view has not changed in reference to the player, except for some objects that may be tied to the position of the device and not to the position of the player. For example, car 1606 has also turned 30° because the player is driving the game and the player is using the device as a steering wheel. As the device turns, the "steering wheel turns" and the car turns with the device. However, the other objects associated with the background, such as tree 1604 and billboard 1602, have not turned in reference to the player.

This concept of turning the device can be generalized by thinking that the view is tied to the player and not to the device. The player could slowly turn the device 360° and the view would not change in reference to the player. Of course, the edges of the view would have to change to accommodate the movement of the display. In the case of dynamic content, such as games, the game can add dynamic content to fill the gaps. In the case of static content, such as a photo, the portions of the display that would not be covered by the photo would be filled with a background, such as a white space.

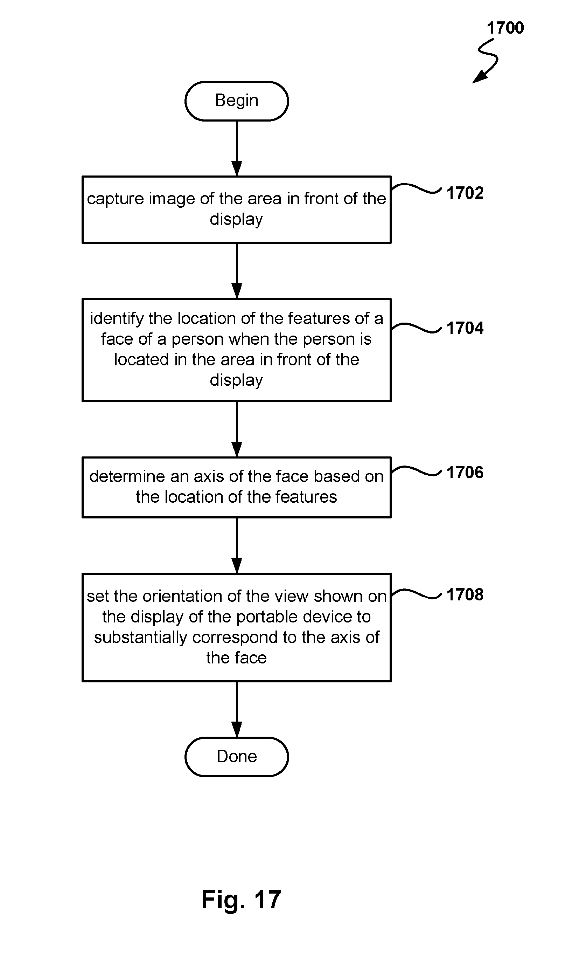

Figure 17 shows the process flow for setting the orientation of a view shown on a display of a portable device in accordance with one embodiment of the invention. In operation 1702, an image of the area in front of the display is captured. In one embodiment, the image is captured with a video camera in the portable device. In another embodiment, an infrared sensor is used to capture the information about the area in front of the display.

Further, the method identifies, in operation 1704, the location of features in the face of a person when the person is located in the area in front of the display. After operation 1704, the method flows to operation 1706 where an axis of the face is determined based on the location of the features. The features of the face that are determined may include the eyes, the mouth, the nose, lines connecting the eyes, lines connecting eyes and nose, shape of the face, glasses worn by a player, a headset on the player's head, etc.

After operation 1706, the method flows to operation 1708, in which the orientation of the view shown on the display of the portable device is set. The orientation is set such that the view substantially corresponds to one axis of the face. In one embodiment, the orientation is set such that an axis of the face parallel to the line connecting the eyes is closest to a horizontal axis of the view in the display. In another embodiment, the horizontal axis of the view is set to exactly parallel the line connecting the eyes of the player, such that a landscape shown in the display, or at least a part of the landscape, remains stable when the portable device is moved with respect to the player.

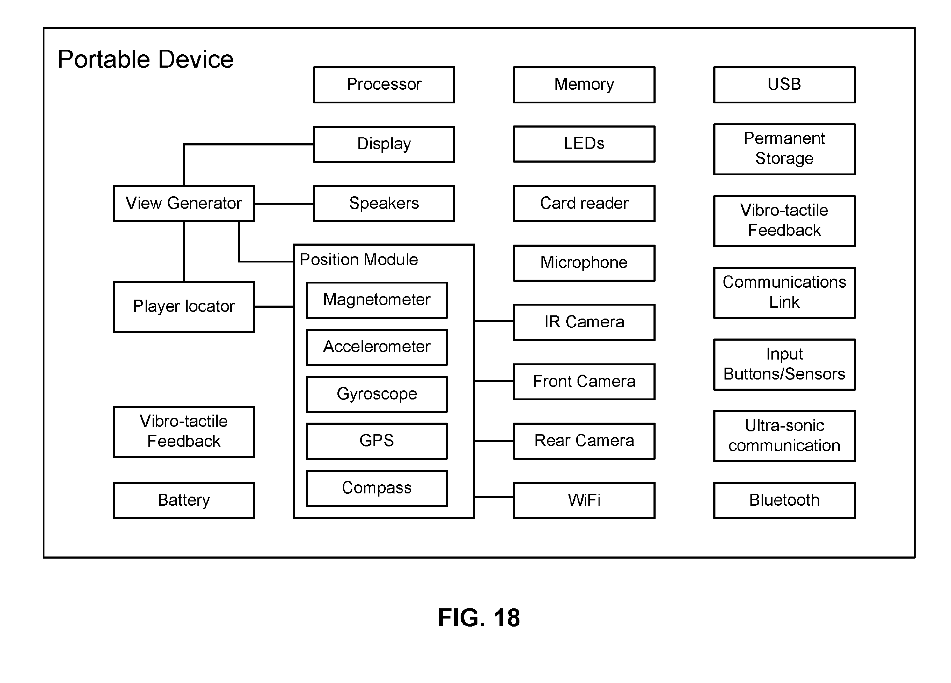

Figure 18 illustrates the architecture of a device that may be used to implement embodiments of the invention. The portable device is a computing device and include typical modules present in a computing device, such as a processor, memory (RAM, ROM, etc.), battery or other power source, and permanent storage (such as a hard disk). Communication modules allow the portable device to exchange information with other portable devices, other computers, servers, etc. The communication modules include a Universal Serial Bus (USB) connector, a communications link (such as Ethernet), ultrasonic communication, Bluetooth, and WiFi.

Input modules include input buttons and sensors, microphone, touch sensitive screen, cameras (front facing, rear facing, depth camera), and card reader. Other input/output devices, such as a keyboard or a mouse, can also be connected to the portable device via communications link, such as USB or Bluetooth. Output modules include a display (with a touch-sensitive screen), Light-Emitting Diodes (LED), vibro-tactile feedback, and speakers. Other output devices can also connect to the portable device via the communication modules.

Information from different devices can be used by the Position Module to calculate the position of the portable device and the user holding the device. These modules include a magnetometer, an accelerometer, a gyroscope, a GPS, a compass, and image information captured by any camera.. Additionally, the Position Module can analyze sound or image data captured with the cameras and the microphone to calculate the position. A View Generator creates a view and selects the proper orientation for presenting the view in the display.

It should be appreciated that the embodiment illustrated in Figure 18 is an exemplary implementation of a portable device. Other embodiments may utilize different modules, a subset of the modules, or assign related tasks to different modules. The embodiment illustrated in Figure 18 should therefore not be interpreted to be exclusive or limiting, but rather exemplary or illustrative.

Embodiments of the present invention may be practiced with various computer system configurations including hand-held devices, microprocessor systems, microprocessor-based or programmable consumer electronics, minicomputers, mainframe computers and the like. The invention can also be practiced in distributed computing environments where tasks are performed by remote processing devices that are linked through a wire-based or wireless network.

With the above embodiments in mind, it should be understood that the invention can employ various computer-implemented operations involving data stored in computer systems. These operations are those requiring physical manipulation of physical quantities. Any of the operations described herein that form part of the invention are useful machine operations. The invention also relates to a device or an apparatus for performing these operations. The apparatus can be specially constructed for the required purpose, or the apparatus can be a general-purpose computer selectively activated or configured by a computer program stored in the computer. In particular, various general-purpose machines can be used with computer programs written in accordance with the teachings herein, or it may be more convenient to construct a more specialized apparatus to perform the required operations.

The invention can also be embodied as computer readable code on a computer readable medium. The computer readable medium is any data storage device that can store data, which can be thereafter be read by a computer system. Examples of the computer readable medium include hard drives, network attached storage (NAS), read-only memory, random-access memory, CD-ROMs, CD-Rs, CD-RWs, magnetic tapes and other optical and non-optical data storage devices. The computer readable medium can include computer readable tangible medium distributed over a network-coupled computer system so that the computer readable code is stored and executed in a distributed fashion.

Although the method operations were described in a specific order, it should be understood that other housekeeping operations may be performed in between operations, or operations may be adjusted so that they occur at slightly different times, or may be distributed in a system which allows the occurrence of the processing operations at various intervals associated with the processing, as long as the processing of the overlay operations are performed in the desired way.

Although the foregoing invention has been described in some detail for purposes of clarity of understanding, it will be apparent that certain changes and modifications can be practiced within the scope of the appended claims. Accordingly, the present embodiments are to be considered as illustrative and not restrictive, and the invention is not to be limited to the details given herein, but may be modified within the scope of the appended claims.

At least embodiments of the invention are defined in the following numbered paragraphs:
1. A method for setting an orientation of a view shown on a display of a portable device, the method comprising:
   capturing an image of an area in front of the display;
   identifying a location of features of a face of a person when located in the area in front of the display;
   determining an axis of the face based on the location of the features; and
   setting the orientation of the view shown on the display of the portable device to substantially correspond to the axis of the face.
2. The method as recited in paragraph 1, wherein setting the orientation of the view further includes:
   selecting an orientation of the view such that a horizontal axis of the view substantially corresponds to a longitudinal or latitudinal axis of the display and such that an absolute value of an angle between a horizontal axis of the face and the horizontal axis of the view is less than or
   equal to 45 degrees.
3. The method as recited in paragraph 1, further including:
   continue setting the orientation of the view as the location of features of the face changes.
4. The method as recited in paragraph 1, wherein the features of the face include eyes and nose of the person.
5. The method as recited in paragraph 4, wherein the axis of the face crosses both eyes, and wherein the nose is located below the axis.
6. The method as recited in paragraph 1, wherein the features of the face include eyes and mouth.
7. The method as recited in paragraph 1, wherein the features of the face include eyes of the person, wherein determining the axis further includes using a location of the eyes and gravity to calculate the axis.
8. The method as recited in paragraph 1, setting the orientation of the view further includes using device inertial information and the location of the features of the face to determine the proper orientation of the view.
9. The method as recited in paragraph 1, further including:
   continue tracking the location of the features of the face, the features including eyes of the person;
   detecting a blink of the eyes; and
   performing an operation in the portable device in response to detecting the blink of the eyes.
10. The method as recited in paragraph 1, wherein setting the orientation of the view further includes:
   selecting an orientation of the view such that a horizontal axis of the view corresponds to a horizontal axis of the face.
11. The method as recited in paragraph 10, wherein the view includes at least one object whose position is relative to a position of the device, and wherein the view includes at least one object whose position is relative to the horizontal axis of the face.
12. A portable device comprising:
   a display;
   a camera to capture images of an area in front of the display; and
   a player locator module that identifies a location of features of a face of a person located in the area in front of the display and determines an axis of the face based on the location of the features;
   wherein the orientation of a view shown on the display substantially corresponds to the axis of the face.
13. The portable device as recited in paragraph 12, wherein the portable device is selected from a group consisting of a game controller, a portable gaming device, a cell phone, a camera, a tablet, a laptop, a personal digital assistant (PDA), a portable music player, a portable video player, a remote control, a digital photo frame, a camcorder, a portable television, or a global positioning system (GPS) device.
14. The portable device as recited in paragraph 12, wherein the camera is an infrared sensor, the features of the face including eyes of the person, the eyes being detected with the infrared sensor.
15. The portable device as recited in paragraph 12, wherein the features of the face include nose and mouth of the person.
16. The portable device as recited in paragraph 12, wherein the features of the face include an oval representing a contour of the face, wherein the axis of the face corresponds to the minor axis of the oval.
17. A computer program embedded in a computer-readable storage medium, when executed by one or more processors, for setting an orientation of a view shown on a display of a portable device, the computer program comprising:
   program instructions for capturing an image of an area in front of the display;
   program instructions for identifying a location of features of a face of a person when located in the area in front of the display;
   program instructions for determining an axis of the face based on the location of the features; and
   program instructions for setting the orientation of the view shown on the display of the portable device to substantially correspond to the axis of the face.
18. The computer program as recited in paragraph 17, wherein the program instructions for setting the orientation further include:
   program instructions for selecting an orientation of the view such that a horizontal axis of the view substantially corresponds to a longitudinal or latitudinal axis of the display and such that an absolute value of an angle between a horizontal axis of the face and the horizontal axis of the view is less than or equal to 45 degrees.
19. The computer program as recited in paragraph 17, wherein the features of the face include eyes of the person when the person is not wearing glasses and glasses on the person when the person is wearing glasses.
20. The computer program as recited in paragraph 17, wherein the features of the face include headsets placed on the ears of the face.
21. The computer program as recited in paragraph 17, wherein the camera is an infrared sensor, wherein a headset placed on the person emits infrared light, the headset being detected with the infrared sensor.

## Claims

1. A method for setting an orientation of a view shown on a display of a portable device, the method comprising:
capturing an image of an area in front of the display;
identifying a location of features of a face of a person when located in the area in front of the display;
determining an axis of the face based on the location of the features; and
setting the orientation of the view shown on the display of the portable device to substantially correspond to the axis of the face.

2. The method as recited in claim 1, wherein setting the orientation of the view further includes:
selecting an orientation of the view such that a horizontal axis of the view substantially corresponds to a longitudinal or latitudinal axis of the display and such that an absolute value of an angle between a horizontal axis of the face and the horizontal axis of the view is less than or equal to 45 degrees.

3. The method as recited in claim 1, wherein the features of the face include eyes and nose of the person.

4. The method as recited in claim 3, wherein the axis of the face crosses both eyes, and wherein the nose is located below the axis.

5. The method as recited in claim 1, wherein the features of the face include one of:
eyes and mouth, or
nose and mouth.

6. The method as recited in claim 1, wherein the features of the face include eyes of the person, wherein determining the axis further includes using a location of the eyes and gravity to calculate the axis.

7. The method as recited in claim 1, setting the orientation of the view further includes using device inertial information and the location of the features of the face to determine the proper orientation of the view.

8. The method as recited in claim 1, wherein setting the orientation of the view further includes:
selecting an orientation of the view such that a horizontal axis of the view corresponds to a horizontal axis of the face.

9. The method as recited in claim 8, wherein the view includes at least one object whose position is relative to a position of the device, and wherein the view includes at least one object whose position is relative to the horizontal axis of the face.

10. The method as recited in claim 1, wherein the features of the face include eyes of the person when the person is not wearing glasses and glasses on the person when the person is wearing glasses.

11. Computer readable media having program instructions executable by a computer, the program instructions defined by any one of the method operations of claims 1-10.

12. A portable device comprising:
a display;
a camera to capture images of an area in front of the display; and
a player locator module that identifies a location of features of a face of a person located in the area in front of the display and determines an axis of the face based on the location of the features;
wherein the orientation of a view shown on the display substantially corresponds to the axis of the face.

13. The portable device as recited in claim 12, wherein the portable device is selected from a group consisting of a game controller, a portable gaming device, a cell phone, a camera, a tablet, a laptop, a personal digital assistant (PDA), a portable music player, a portable video player, a remote control, a digital photo frame, a camcorder, a portable television, or a global positioning system (GPS) device.

14. The portable device as recited in claim 12, wherein the camera is an infrared sensor, the features of the face including eyes of the person, the eyes being detected with the infrared sensor.

15. The portable device as recited in claim 12, wherein the features of the face include an oval representing a contour of the face, wherein the axis of the face corresponds to the minor axis of the oval.
